# EUROPEAN PATENT SPECIFICATION

(11) **EP 2 692 003 B1**
(45) Date of publication and mention of the grant of the patent: **03.10.2018**
(21) Application number: 12711098.9
(22) Date of filing: 20.03.2012
(51) Int. Cl.: H01M 4/86, H01M 4/88, C04B 38/10, B28B 1/50, B28B 7/44, C04B 111/00, H01M 8/124

(54) **METHOD FOR MANUFACTURE AN ELECTRODE FOR A SOLID OXIDE FUEL CELL**
VERFAHREN ZUR HERSTELLUNG EINER ELEKTRODE FÜR EINE FESTOXIDBRENNSTOFFZELLE
PROCÉDÉ DE FABRICATION D'UNE ÉLECTRODE POUR PILE À COMBUSTIBLE À OXYDE SOLIDE

(30) Priority: 28.03.2011 US 201113073070
(43) Date of publication of application: 05.02.2014
(73) Proprietor: Watt Fuel Cell Corp., Port Washington, NY 11050 (US)
(72) Inventor: FINNERTY, Caine, M., Buffalo, NY 14223 (US); SHARP, Rebecca, L., Port Washington, NY 11050 (US); EMLEY, Benjamin, J., Bolivar, OH 44612 (US)
(74) Representative: Fabry, Bernd
(86) International application number: PCT/US2012/029778
(87) International publication number: WO 2012/134882

(56) References cited:
- WO-A1-01/05542
- DE-A1- 19 612 985
- DE-A1-102006 057 772
- JP-A- 2007 165 143
- JP-A- 2008 293 828
- US-A1- 2010 056 355
- MA B ET AL: "Novel structural functional films based on self-assembly template and electrodeposition: Synthesis and characterization of porous Ni/YSZ films", THIN SOLID FILMS, ELSEVIER-SEQUOIA S.A. LAUSANNE, CH, vol. 517, no. 17, 1 July 2009 (2009-07-01) , pages 5172-5175, XP026131853, ISSN: 0040-6090, DOI: 10.1016/J.TSF.2009.03.076 [retrieved on 2009-03-20]

## Description

### BACKGROUND OF THE INVENTION

This invention generally relates to a method of manufacture an electrode component of a solid oxide fuel cell. More particularly, the invention relates to the manufacture of anodes and cathodes for use in the fabrication of solid oxide fuel cells.

Increasing demand for convenient, reliable and clean energy systems has drawn much attention to the development of fuel cells.

A fuel cell is a device that produces electrical energy from a fuel and an oxidant in an electrochemical reaction. The fuel is typically hydrogen, natural gas, coal gas or other hydrocarbon-based fuel and the oxidizer is typically air, oxygen or other oxidizing composition.

A typical fuel cell generally includes a cathode, anode, electrolyte and an interconnect. The electricity-generating electrochemical reaction is carried out in a fuel cell in a controlled, stepwise manner. For example, at the cathode, oxygen reduces to oxygen ions, the solid electrolyte allows only these ions to pass through, the anode catalytically extracts electrons from the fuel, and the interconnect transports the electrons from the anode to the cathode to complete the process whereby the electrical current generated can be utilized for various applications that require electrical power.

Several types of fuel cells are known in the art. Although the basic components and function of each type is similar, the details of operation and the materials used in construction, however, are significantly varied. The present invention is especially applicable to fuel cells utilizing a solid electrolyte, i.e., solid oxide fuel cells (SOFC).

A typical SOFC contains a solid, oxygen ion-conducting electrolyte separating a fuel electrode (anode) from an air electrode (cathode). During operation, electrons are released and the electrochemical potential of the reaction draws the electrons through a circuit, preferably, an external circuit, where this electromotive force is utilized. Because the maximum voltage of a single fuel cell is relatively low, a typical unit intended for commercial application would include a plurality of fuel cells connected in series, in parallel, or as combinations thereof, through an electrical interconnect. This combination of fuel cells is commonly referred to as a "stack".

Currently, stabilized zirconia is generally the material of choice for construction of the electrolyte. The anode is typically fabricated from a Ni and stabilized zirconia cermet and the cathode from a perovskite composition.

There are generally three geometries of SOFC: tubular, planar and monolithic. Each of these geometries is similar in basic structure (anode, cathode, solid electrolyte, etc.). See, e.g., U.S. Patent No. 7,476,461. Furthermore, each of the basic geometries of SOFC may be realized in a variety of configurations. For example, a SOFC may be an electrolyte-supported type where a dense electrolyte is used as the support and electrodes are applied to both sides of the electrolyte. See, e.g., U.S. Patent Nos. 5,273,837 and 6,428,920. A SOFC may also be of the air electrode-supported type where the air electrode contains an inner porous impregnated-lanthanum manganite substrate coated with a gas-tight electrolyte layer, anode and interconnect coatings. See, e.g., U.S. Patent Nos. 5,108,850 and 5,989,634. Additionally, a SOFC may be of the fuel electrode-supported type where the anode cermet acts as the support and the electrolyte layer underlying the air electrode is provided as a thin film. See, e.g., U.S. Patent Nos. 5,998,056 and 6,228,521.

The output power of a SOFC is to a large extent a function of its operating temperature and its area specific resistance (ASR). The ASR of the cell is typically optimized through suitable formulation of the compositions from which the electrodes and/or electrolyte are made and by adjustment of particle size and sintering conditions to provide the desired morphology.

The aforementioned ASR of the anode, for example, may be influenced by its Ni content. Lower Ni content will often provide a more stable structure with better thermal expansion characteristics. However, to achieve good electrical conductivity and a low ASR, the Ni must form a conducting "network" which generally requires a higher Ni content. Optimal design of the anode for a particular SOFC requires that a balance be reached between the stability of the cell and its conductivity and ASR properties.

The ionic conductivity of the electrode also has a major influence on the power produced. The electrochemical reactions that drive the fuel cell are widely thought to occur at or around the three phase boundary (TPB), i.e., the zone where the electrolyte meets the anode and the anode is in contact with the reactant gas. This zone is generally considered to exist at the actual interface between the electrolyte and the anode. If the ionic conductivity of the anode could be substantially increased without detrimentally affecting its electrical properties, substantial power increases could be obtained. This increased conduction of oxygen ions through the anode would likely have the added benefit of reduced carbon deposition.

At start up, the fuel cell is heated until the desired operating temperature is reached at which point the fuel cell is controlled to maintain this temperature. The ionic conductivity of the electrolyte is a function of temperature. Therefore, it is imperative that the desired operating temperature be reached as rapidly as the fuel cell and stack components will allow.

Operating temperature is another important design consideration. SOFCs are generally operated between 600° C to 1,100° C. High temperatures add complexity to the overall design, e.g., affecting the type of seals that may be employed. However, efficiency increases with higher operating temperatures by increasing the electrolyte conductivity and reducing the polarization losses of the air electrode. Recent development of electrolytes and air electrodes that lead to lower temperature operation may be useful when the system operates on hydrogen. This is not practical for hydrocarbon based fuels until more efficient low temperature reforming catalysts are developed.

One of the advantages of the SOFC is its inherent capability for operating on a variety of fuels including hydrocarbon fuels. These fuels are reformed directly at the anode or indirectly in a reforming unit placed within or near the stack. Reforming is typically accomplished at elevated temperatures and thus integration of the reforming unit within the stack (i.e., internal reforming solid oxide fuel cell, or IRSOFC) tends to provide a more efficient overall system design. See, e.g., U.S. 2009/0023050.

Internal reforming is preferred over indirect or external reforming as benefits from coupling exothermic fuel cell reactions and endothermic reformer reactions can increase efficiency and greatly simplify and reduce the size of the system. Unfortunately, anode electrodes known in the art are susceptible to carbon deposition when operating on hydrocarbon fuels.

SOFCs are being developed by numerous groups and hold great promise for commercial use due to their many benefits. Among these are the possibility of operating on a variety of fuels, efficient energy conversion and low pollution. Multi-fuel capability is a highly desirable characteristic considering that hydrogen is currently neither widely nor conveniently available and is not expected to be so for the foreseeable future. However, successful commercialization demands that a SOFC be consistently manufactured to exacting specifications, that it be reliable, efficient, mechanically and thermally stable, and that it require no more than simple and/or minimal maintenance for extended term operability.

The commercialization of SOFCs lacks robust manufacturing with minimal variances. Many ceramic processes are used in commercialization but none have been able to sufficiently reduce the cost of SOFCs and maintain the performance criteria of the state of the art. Reducing the operating temperature with new materials and designs while maintaining the state of the art performance and implementing commercial manufacturing processes is currently the focus of the industry.

It is therefore desirable to have a SOFC and a method for its manufacture that increases both power density and fuel flexibility.

Several attempts have been made to increase the power density with new materials. One approach to increasing ionic conduction is through the use of non-zirconia based electrolytes. For example, U.S. Patent Nos. 4,851,303 and 5,134,042 disclose a variety of non-zirconium solid electrolytes having a polycrystal or single crystal structure such as lanthanum fluoride, lead potassium fluoride, lead bismuth fluoride, lanthanum strontium fluoride, lantham strontium lithium fluoride, calcium uranim, cesium fluoride, PbSnF₈, Ksn₂F₄, SrCl2.KCl, LaOF₂, PbSnF₂.PbSnO, lanthanum oxyflouride, oxide, calcium fluoride, SmNdFO, and the like. The use of non-zirconia based electrolytes introduces significant challenges to the design of integrated SOFC systems and has not gained wide acceptance as indicated by the relatively few developmental efforts being devoted to non-zirconia systems as compared to zirconia-based electrolyte development. Thermal expansion matching of the electrodes and interconnect is another area that is complicated by the use of non-zirconia electrolytes. Furthermore, some non-zirconia electrolytes such as some ceria-based electrolytes exhibit electronic conduction in fuel atmospheres resulting in excessive fuel consumption.

The use of vapor-deposited thin film YSZ electrolytes such as those disclosed in U.S. Patent Nos. 5,753,385 and 6,007,683 has been one approach to increasing ionic conductivity. U.S. Patent No. 6,548,424 discloses an atomic layer deposition process for production of thin film YSZ electrolytes wherein alternating vapor-phase pulses of constituent materials are introduced into a reaction zone and contacted with a substrate. While thin films are successful in reducing the resistance of the electrolyte by limiting the path length, the reliability of the fuel cell may be compromised due to significant impairment of its structural integrity. Gas leakage through the thin sections is another consideration as it may result in degraded efficiency. In addition, manufacturing cost may be considerably higher with vapor deposition techniques as compared to the powder processing procedures that are commonly employed.

U.S. Patent No. 5,993,989 discloses an interfacial layer of ceria-stabilized zirconia between the air electrode and the electrolyte that may be employed to reduce losses and operate over a wide range of temperatures. By incorporating such a layer, some control of interaction between the air electrode and electrolyte and a reduction of polarization loss may be achieved. In U.S. Patent No. 6,207,311, a scandia-stabilized zirconia electrolyte having high electrical conductivity is disclosed where the electrolyte material may be a very thin layer. Although the approaches disclosed in the foregoing patents may be used to reduce losses, the addition of an intermediate layer adds complexity, and therefore cost, to the manufacturing process. In addition, thin electrolytes are fragile and may result in an unreliable fuel cell.

DE 19612985 A1 discloses a method for manufacture a porous ceramic article comprising the steps of (a) converting a slip material made of sinterable inorganic powder, a vaporisable material, and a material forming a propellant gas, into a foamed product with release of the propellant gas; (b) treating the foamed product, which removes the flowability of the slip material forming an open-pored intermediate body, where steps (a) and (b) can run simultaneously; (c) removing any remaining fluid materials from the body forming a green foamed body; and (d) sintering to form the sintered foam product.

US 2010/056355 discloses a method for producing a porous ceramic article, comprising the steps of: providing a precursor batch for forming a porous ceramic article; injecting a gas into the precursor batch and mixing the gas and precursor batch; applying pressure to the precursor batch and gas mixture wherein the pressure is sufficient to liquefy the gas; forming the precursor batch into a green body while maintaining the pressure; removing the pressure from the green body; and firing the green body to produce a porous ceramic article.

WO 01/05542 discloses a process for forming microporous ceramic parts, the process comprising (a) providing a feedstock comprising powdered ceramic material and a binder having a melting point; (b) injection molding the feedstock to provide a porous green part, the injection molding comprising (1) heating the feedstock to a temperature greater than the melting point of the binder to provide a plasticized feedstock; (2) mixing a pore-forming agent with the plasticized feedstock; and (3) filling a mold with the plasticized feedstock; (4) permitting the plasticized feedstock to solidify in the mold; (c) debindering the porous green part to substantially remove the binder and provide a debindered porous green part; and (d) sintering the de bindered porous green part.

There is a need for a low cost method for making a SOFC that can utilize a wide variety of electrode-forming materials.

### SUMMARY OF THE INVENTION

In one embodiment of the present invention, a method of making a ceramic or cermet body is provided that is especially suitable for the construction of an electrode component of a solid oxide fuel cell (SOFC), in particular, the anode and/or cathode component of such a fuel cell.

In yet another embodiment of the present invention, a low cost manufacturing method is provided for producing a SOFC in a reliable and consistent manner and in such a way that it may be applied to a variety of configurations of anode, electrolyte and cathode materials.

According to the present invention, these and other aspects of the invention are achieved by providing an electrode having a ceramic or cermet body possessing a quantity of spherical voids entrained therein.

In another aspect of the invention, a method of making a ceramic or cermet body, suitable, *inter alia,* for providing an electrode component of a SOFC, is provided which comprises:
a) preparing a ceramic-forming or cermet-forming composition comprising (i) at least one ceramic powder, (ii) at least one binder, (iii) at least one dispersant; and (iv) at least one solvent;
b) chilling the composition
c) dissolving carbon dioxide gas in the chilled composition under pressure while said composition is in a fluid state;
d) confining dissolved carbon dioxide-containing chilled composition while under pressure and in a fluid state;
e) releasing dissolved carbon dioxide gas from the composition while said composition is undergoing transition from a fluid state to a semi-rigid state, the release of carbon dioxide gas resulting in the formation of spherical voids in the composition;
f) allowing the spherical void-containing composition to undergo transition from the semi-rigid state to a rigid state, spherical voids being entrained within the resulting rigid composition; and,
g) sintering the rigid composition containing spherical voids therein to provide the ceramic or cermet body.

There are many advantages and benefits to employing the foregoing method, referred to herein as a "carbonation" method, for forming a spherical void-containing electrode intended for use in the fabrication of a SOFC.

Standard methods of incorporating pore-forming materials into slurries and inks employed in the fabrication of SOFCs can cause difficulties in processing due to viscosity issues and adverse chemical interactions occurring between the pore forming material and the system to which the material is added. In the carbonation method of the present invention, voids resulting from the release of dissolved carbon dioxide gas from an electrode-forming composition will by nature be spherical. These spherical voids will be beneficial during the operation of the finished electrodes due to their inherent strength. The spherical shape of the voids will allow the voids to dissipate applied stresses more easily including those stresses resulting from rapid and/or frequent thermal cycling. The ability to dissipate thermal stresses is a highly beneficial property for electrodes used in the fabrication of SOFCs as the need to withstand thermal expansion stresses due to frequent thermal cycling is an important factor in the realiability and durability of these devices.

The ability to control the total void volume attributable to the spherical voids formed via the carbonation method of this invention represents yet another significant advantage of the carbonation method herein. Unlike some known processing methods wherein particulates are admixed with electrode-forming slurries followed by their pyrolysis, or burning out, to produce voids, methods that can result in uneven and/or unpredictable distribution of the voids within the finished electrodes, the method of this invention can be readily controlled through suitable selection of pressure and temperature conditions to provide a desirably predictable and reproducible pattern of spherical voids throughout the thickness of the electrodes.

The expression "spherical voids" is used herein to differentiate over irregularly shaped "pores" such as those resulting from the burning out of binder which occurs during the sintering operation described *infra,* and those resulting from reduction of metal oxide particles in the case of a cermet body.

The expression "spherical voids" shall be understood herein to apply to individual, i.e., isolated, spherical voids, as well as those voids formed from the intersection, or conjunction, of two or more spherical voids, e.g., as is characteristic of a foam. Thus, the expression "spherical voids" contemplates conjoined voids in which only a portion of a particular void will possess a portion of its surface corresponding to a section of the surface of a sphere. The term "voids" shall be understood to mean "cavities" or "gas-filled spaces" having the aforesaid spherical configuration.

### BRIEF DESCRIPTION OF THE DRAWINGS

The nature and mode of operation of the present invention will now be more fully described in the following detailed description of the invention taken with the accompanying drawing figures wherein:
Fig. 1A is an isometric view of a tubular SOFC possessing a spherical void-containing cermet anode component fabricated in accordance with the carbonation method of the invention;
Fig. 1B is an isometric view of a planar SOFC possessing a spherical void-containing cermet anode component fabricated in accordance with the carbonation method of the invention;
Fig. 2 is a cross-sectional view of a SOFC fabricated in accordance with the carbonation method of the invention and illustrating its components under operating conditions;
Fig. 3 is a block diagram illustrating the sequence of steps in one embodiment of a method of manufacturing an SOFC employing the carbonation method of the invention;
Fig. 4 is a diagrammatic view of a carbonation chamber/mold apparatus for manufacturing a spherical void-containing anode component of an SOFC in accordance with the carbonation method of the invention; and,
Fig. 5 is a graphical presentation of data showing the relationship in solubility of dissolved carbon dioxide per kg of water as a function of the temperature of the water.

### DETAILED DESCRIPTION OF THE INVENTION

It is to be understood that the invention herein is not limited to the particular procedures, materials and modifications described and as such may vary. It is also to be understood that the terminology used is for purposes of describing particular embodiments only and is not intended to limit the scope of the present invention which will be limited only by the appended claims.

Unless defined otherwise, all technical and scientific terms used herein have the same meaning as commonly understood by one of ordinary skill in the art to which this invention belongs. Methods, devices and materials similar or equivalent to those described herein can be used in the practice of the invention as those skilled in the art will recognize.

The following terms and expressions as appearing in the specification and appended claims are intended to have the following meaning: "conventional" or "conventional-sized", and variations thereof, mean solid materials, in dry powder form, having a size distribution whereby >75% of the particles are greater than or equal to 300 nm in size and whereby the specific surface area is lower than 50 m²/g, and "nano-sized" or variations thereof, mean solid materials, in dry powder form, having a size distribution whereby >75% of the particles are less than or equal to 300 nm in size and whereby the specific surface area is greater than about 50 m²/g.

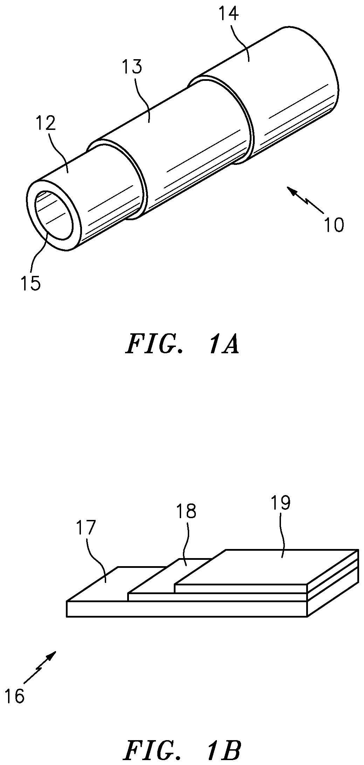

Referring now to the figures, Fig. 1A is a general view of a tubular SOFC 10 possessing a cermet-based, spherical void-containing anode (i.e., fuel electrode) fabricated in accordance with the carbonation method of the invention. SOFC 10 is provided as a cylindrically shaped tubular body modified to best illustrate internal cermet anodic layer 12, intermediate cermet electrolyte layer 13 and external cathode layer 14. Anode layer 12 defines an inner tubular bore 15.

Fig. 1B is a general view of a planar SOFC 16 also fabricated in accordance with the carbonation method of the invention. SOFC 16 is provided as a planar shaped flat body possessing an internal cermet anodic layer 17, intermediate cermet electrolyte layer 18 and external cathode layer 19.

A relatively thick cermet anode provides mechanical reliability and durability while a relatively thin cermet electrolyte allows for better thermal expansion matching and electrochemical performance. The use of the anode as the support structure for an SOFC is most beneficial from the standpoint of performance as well as for processing. With anodes of a thickness on the order of about 0.2 to about 1.0 mm, it is possible to achieve high power densities through increased electrical conductivity and reduction of activation overpotential (i.e., voltage losses due to electrochemical charge transfer reactions). Thinner substrates would be impractical since the support would be too fragile and electrical conductivity would be insufficient.

The content of the electrochemically active substance in the cermet is preferably metal. When used in the anode, the metal content is preferably in the range of from about 30 vol % to about 80 vol %, based on the total solids loading. When the metal content is less than 30 vol %, the cermet anode generally has poor electrical conductivity. When the metal content of the cermet anode is greater than 30 vol %, a good interfacial bonding is brought about among the metal particles, resulting in an increase in electrical conductivity.

In order to enhance SOFC performance, the total void volume of the anode i.e., the estimated combined volume of its spherical voids, the irregular pores resulting from the burning out of the binder during the sintering operation and the irregular pores resulting from reduction of the metal oxide component, may be increased so that concentration polarization losses as a result of resistance to gas flow is kept to a minimum. In accordance with the invention, increased void volume is mainly provided by the release of dissolved carbon dioxide and the consequent formation of permanently entrained spherical voids during the electrode-forming process as described in detail *infra.* Optionally, still further porosity can be created via the use of artificial pore formers (e.g., carbon powder, starch, polymer spheres), subsequently burned out during the sintering operation.

Metal contents of the cermet anode, e.g., up to about 80 vol %, are generally adequate to ensure very high electrical conductivity while maintaining sufficient void volume to minimize concentration polarization. Higher amounts of metal in the cermet anode can result in a large thermal expansion coefficient mismatch with the coated cermet electrolyte resulting in cracks developing during processing or cell operation. The ceramic material of the cermet anode is discussed in detail below.

Excessive thermal expansion coefficient mismatch between the cermet anode support and a typical ceramic (i.e., 100% ceramic) electrolyte generally arises when the metal content of the anode is too high. This detrimental effect can generally be avoided by limiting the amount of metal present in the anode to, for example, approximately 50 vol % (see U.S. Pat. No. 6,436,565), or by using a graded anode structure (see U.S. Pat. No. 6,228,521). The present invention allows for large amounts of metal to be included in the anode, specifically, greater than 50 vol %. The application of a thin electrolyte layer onto a single-layered anode-supported SOFC is also more viable from a processing standpoint.

When metal is incorporated in the electrolyte structure in relatively small amounts, e.g., about 0.1 vol % to 15.0 vol %, it is possible to greatly reduce the thermal expansion coefficient mismatch between the anode and the electrolyte. Therefore, a thin cermet electrolyte can be layered onto a highly conductive supported anode without detrimental effects to the structural integrity of the cell.

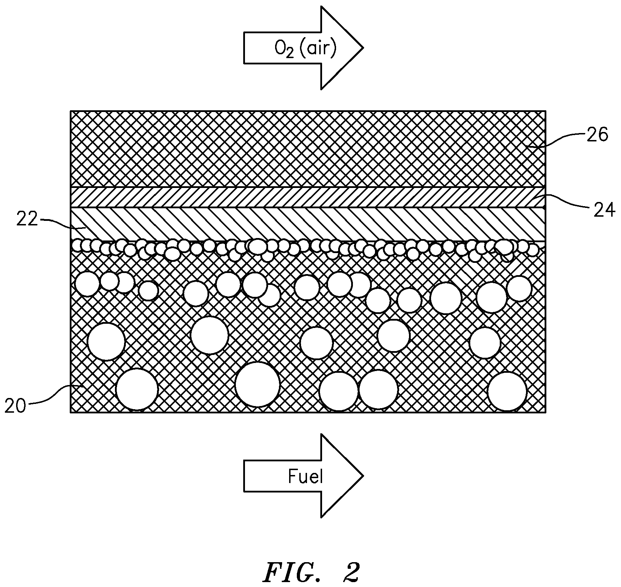

Provided that the amount of metal incorporated in the electrolyte remains sufficiently small, and the metal phase is well-dispersed in the ceramic matrix, electrical conductivity in the electrolyte will remain sufficiently low to avoid electrical shorting. Under normal SOFC operating conditions, metal contained in the electrolyte exists in its elemental (reduced) form on the fuel side while the presence of air on the cathode side maintains the metal in its metal oxide (oxidized) form (see Fig. 2). The thicknesses of these metal/ceramic and metal oxide/ceramic sub-layers are dependent upon the partial pressures of the fuel and oxidant (air). The metal oxide/ceramic electrolyte sub-layer must be dense and gas-tight in order to prevent mixing of the fuel and oxidant gases.

Under operating conditions, metal present in the reduced electrolyte sub-layer creates a graded anode structure within the anode, which limits anode/electrolyte interfacial resistance and improves adhesion between these layers. Electrochemical performance is also enhanced through increased three-phase boundary area. Metal oxide present in the oxidized electrolyte sub-layer creates a very thin and dense electrolyte structure required for high efficiency and lower operating temperatures. The aforementioned behavior is described in greater detail in view of FIG. 2.

Fig. 2 illustrates a spherical void-containing supporting anode (layer 20), a porous cermet electrolyte (layer 22), a dense cermet electrolyte (layer 24) and a cathode (layer 26). Under SOFC operating conditions, metal is oxidized (e.g., NiO) in the dense cermet electrolyte (layer 24) while metal is reduced (e.g., Ni) in the porous cermet electrolyte (layer 22). Enhanced electrochemical performance results from the existence of electrolyte sub-layers, specifically the metal/ceramic and metal oxide/ceramic layers. The reduced metal/ceramic sub-layer, i.e., the porous cermet electrolyte (layer 22), effectively becomes the electrolyte/anode interface. Activation polarization is then reduced since this interface contains a large amount of ceramic substance.

Electrochemical reactions are also enhanced through increased three-phase boundary domain. Depending on the partial pressures of the fuel and oxidant, the metal oxide/ceramic sub-layer, i.e., the dense cermet electrolyte (layer 24), can become very thin (less than 10 microns). Provided that the metal oxide phase is sufficiently low (<15 vol %) and well-dispersed in the ceramic matrix, it is possible to achieve a dense, thin and gas-tight metal oxide/ceramic structure. The ionic conductivity of the cermet electrolyte depends directly on the dispersion state and the electrochemical activity of the metal oxide phase. By decreasing the thickness of the dense cermet electrolyte (layer 24) under operating conditions (through reduction of the metal oxide on the fuel side), the electrolyte electrical resistance is also lowered. Therefore, if any losses in ionic conductivity through the dense cermet electrolyte (layer 24) occur due to the presence of a non-ionic or mixed ionic conductive secondary phase (e.g., metal oxide), such will be compensated by minimized electrical resistance losses.

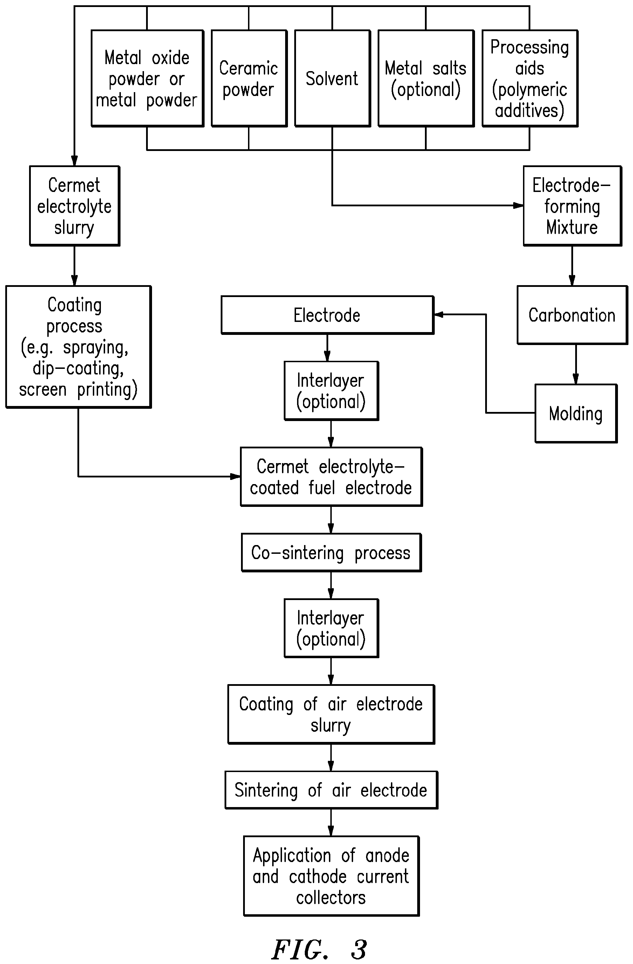

FIG. 3 is a manufacturing method block diagram illustrating one embodiment of the carbonation method of the present invention for the fabrication of a cermet-based anode-supported SOFC. While nickel-based materials and 8 mol % yttria-stabilized-zirconia are used in various processing stages as previously mentioned, other transition metals and ceramic materials known in the art can also be used.

The manufacturing method shown in FIG. 3 involves preparing an anode-forming mixture containing metal and ceramic compounds in particulate form. A slurry-forming amount of solvent or mixture of solvents such as water, organic liquid or aqueous solution of organic and/or inorganic material(s) is used to provide a slurry of the particulates. Water is generally preferred for this purpose due to its low cost and its avoidance of environmental concerns such as flammability and toxicity which are associated with the use of organic solvents. The particulates are maintained in suspension within the slurry with the aid of a dispersant or suspending agent of which many kinds are known in the art, e.g., a polyacrylic acid. An organic binder is incorporated in the anode-forming mixture in order to solidify, or set-up, the mixture into a self-supporting mass during the molding operation. The organic binder may be one that undergoes gelling by a physical mechanism, e.g., swelling in the presence of water and/or organic liquid, or by a chemical mechanism, e.g., crosslinking of polymer chains, or a combination of binders that individually undergo gelling, one by a physical mechanism, another by a chemical mechanism.

Useful water-swellable binders include such water-soluble and/or dispersible substances as methycellulose, polyvinyl alcohol, alginate, starch, modified starch, gum arabic, agar-agar, and the like. Useful binders of the cross-linkable polymer variety include polyacrylamides, polyacrylates, and the like.

One or more known or conventional additives such as initiators, catalysts, cross-linking agents (when a crosslinkable polymeric binder is utilized), plasticizers, etc., in art-recognized amounts can also be used to ensure a well-dispersed, homogeneous and eventually self-supporting composition (see R. J. Pugh et al., "Surface and Colloid Chemistry in Advanced Ceramics Processing", Marcel Dekker, October 1993). The physical characteristics of these anode-forming mixtures such as their viscosity and the time required for their transition from a fluid state to a self-supporting state can be controlled through selection of the components of the mixtures and/or their amounts. The mixtures may then be processed into finished SOFC electrodes employing any of several known and conventional molding procedures utilizing the carbonation method of the invention.

The ceramic material used in the fuel electrode (anode) support and the electrolyte may be stabilized-zirconia, preferably used for high-temperature SOFC (700° C to 1000° C). This includes preferably 8 mol % yttria-stabilized zirconia ("Y8SZ"), (ZrO₂)_{0.92}(Y₂O₃)_{0.08}. Another material of interest is doped-ceria, preferably used for intermediate temperature SOFC (500° C to 700° C). This includes preferably gadolinium-doped ceria ("CGO"), (Ce_{0.90}Gd_{0.10})O_{1.95}. However, each of these materials may be employed over a wide range of temperatures. Of course, it is contemplated that other materials suitable for SOFC electrolyte applications known in the art may be used.

The metal phase used in the cermet fuel electrode (anode) and the cermet electrolyte belongs, preferably, to the transition group of metals of the periodic table of elements, their alloys or physical mixtures. Nickel (Ni) is preferred, because of its high electrical conductivity under reducing atmosphere and its cost effectiveness. Metal may be introduced in the supported fuel electrode and cermet electrolyte via different precursors, known to those skilled in the art such as metal powders, metal oxide powders, and metal salts (aqueous or non-aqueous). Metal oxide powders, such as green NiO, are often preferred because of their cost effectiveness and their adaptability to ceramic processing. The use of fine metal oxide powders is particularly recommended for the cermet electrolyte processing since the metal will remain oxidized under SOFC operating conditions.

The metal phase range may vary from about 30 vol % to 80 vol % in the cermet anode. The thickness in the sintered state of the cermet anode will depend on the overall design of the fuel cell. For example, anode thickness in small diameter tubular fuel cells may range from about 0.2 mm to about 1.0 mm.

The metal phase range may vary from about 0.1 vol % to about 15 vol % in the cermet electrolyte. The thickness of the cermet electrolyte in the sintered state is preferably below 500 microns, and is most preferably between 5-30 microns in thickness. The actual thickness will depend in part on the size and design of the fuel cell.

The use of a thick anode support allows for very thin subsequent electrolyte and cathode coatings. The reduced thickness of the electrolyte coating offers enhanced thermal shock resistance and electrochemical performance. The enhanced cell performance and stability also enables the cell to operate at lower temperatures. This, in turn, enables cost-effective materials (e.g., stainless steel) to be used within the stack (e.g., for cell manifolding).

The foregoing process also allows for depositing thin interlayers between the electrode and the electrolyte structures without affecting the number of sintering cycles. There are potential advantages in applying interlayer thin films between the anode and the electrolyte, the electrolyte and the cathode, or both. The purpose of such layers may be to increase cell performance, e.g., through the use of catalytic materials, or to prevent adverse chemical reactions during sintering. These interlayers are optional in the present invention as indicated in Fig. 3. The interlayer may be comprised of catalysts. Representative examples include CGO, i.e., ceria gadolinium oxide, as previously disclosed, used in a range of from about 40 to about 60 vol %, together with the balance being Ni and Ru. Others may include scandium-stabilized zirconia, i.e., SSZ, used with Ni and Ru. The interlayers may also contain other catalytically active metals, like Pt, Pd and Rh to name but a few.

The geometry of the anode support may be tubular and open at both ends, tubular and closed at one end, planar, or any other configuration known in the art. In particular, extrusion of plastic masses is preferred for manufacturing tubular shapes (open at both ends or closed at one end). U.S. patent No. 6,998,187 provides examples of variations on manufacturing tubular shapes.

Planar shaped electrodes are preferably molded using casting techniques (i.e., liquid processing) or pressing techniques (i.e., dry processing). Casting techniques include slip-casting, centrifugal casting, gel-casting, tape-casting, and the like. All of these processing techniques are described in the literature. See, in this regard, J. S. Reed, "Principles of Ceramic Processing, 2nd Edition", J. Wiley & Sons, (1994).

In any shape, the anode-forming mixture may be a plastic mass molded by extrusion techniques. The anode-forming mixture may be an aqueous or non-aqueous slurry molded by casting techniques, preferably slip-casting, centrifugal-casting, gel-casting, or tape-casting.

The procedure by which cermet materials in general, and electrode components (e.g., the anodes of SOFCs and IRSOFCs) in particular, can be made to possess a quantity of entrained, spherical voids in accordance with the invention will now be described in detail. These procedures in their general aspects may be made to apply to both solid forms of electrodes and those deposited as coatings, or "inks."

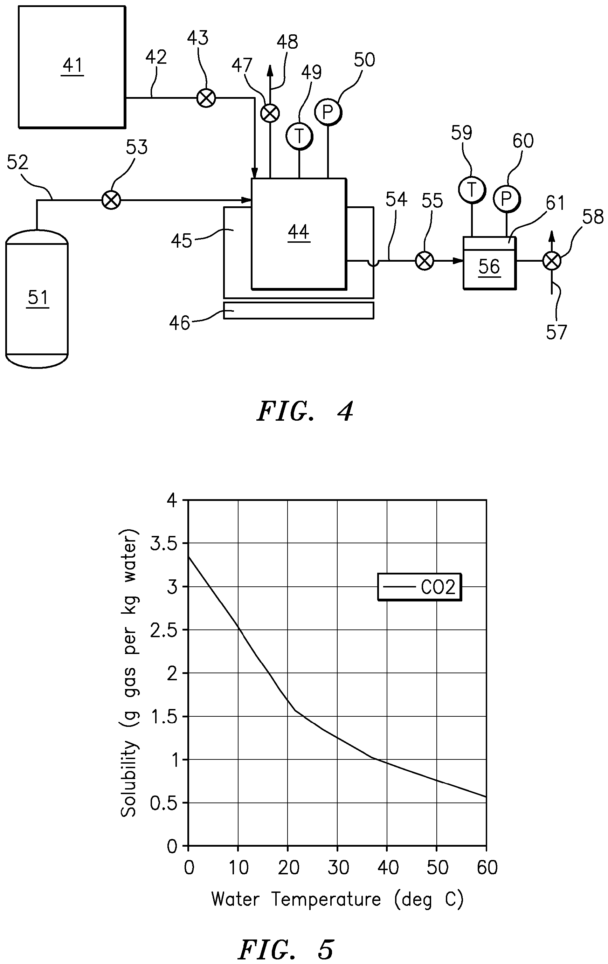

For purposes of illustration, the spherical void-incorporating carbonation method of the invention will be described in connection with the manufacture of the anode (fuel electrode) component of an IRSOFC employing the gel-casting system of Fig. 4. This gel-casting system utilizes an aqueous cermet-based anode-forming slurry prepared and formulated in accordance with the procedures described *supra.* It will be understood herein that with suitable modification, the spherical void-incorporating carbonation method herein can be applied to the manufacture of the cathode component of a SOFC as well.

A measured quantity of an aqueous anode-forming slurry is kept in mixing/storage vessel 41 of gel-casting system until it flows through inlet 42 controlled by valve 43 into carbonation chamber 44 provided with cooling jacket 45 for chilling the slurry, magnetic stirrer plate 46 for stirring the contents of chamber 44 thereby preventing the settling of solids contained in the slurry present therein and increasing the ease of the dissolution of the carbon dioxide into the slurry, pressure relief valve 47 permitting release of gas from vessel 44 through outlet 48, and temperature and pressure gauges 49 and 50, respectively. Upon closure of control valves 43 and 48 which results in the sealing of carbonation chamber 44, carbon dioxide gas in vessel 51 is introduced through inlet 52 controlled by valve 53 into the chilled slurry contained in carbonation chamber 44 under a partial pressure which is sufficiently high as to cause the gas to dissolve into the slurry. Thereafter, and with the closure of valve 53, a measured quantity of the chilled slurry containing dissolved carbon dioxide gas is transferred from carbonation chamber 44 though inlet 54 controlled by valve 55 into suitably configured mold unit 56 provided with molded article removal means and a pressure-tight mold sealing lid 61 which on being opened permits ready removal of the molded article. Mold unit 56 is also provided with pressure relief valve 57 permitting release of carbon dioxide gas through outlet 58, and temperature and pressure gauges 59 and 60, respectively.

While gel-casting system can be operated manually, it can be readily adapted to automated or semi-automated operation employing known and conventional microprocessor controls.

Gel-casting system can include more than the single mold-unit 56 shown and for many industrial applications, will possess a series of such mold units operated either in unison or in staggered fashion as optimum manufacturing conditions may warrant.

Gel-casting system can also be operated in such a way that carbonation chamber 44 will also function as a molding unit in which case a separate mold unit such as mold unit 56 can be dispensed with. In such dual carbonation chamber/molding unit configuration, chamber 44 will also possess molded article removal means and a mold sealing lid 61 like that of mold unit 56.

Returning again to gel-casting system and its operation, once the anode-forming slurry has been introduced into sealed carbonation chamber 44, it will be chilled to a temperature above its freezing point, e.g., to a temperature of from just above 0° C to less than 10° C, with the carbon dioxide gas thereafter being introduced into the slurry under partial pressures of, e.g., from about 0.5 to about 5 atm and preferably from 1 to 3 atm. Whatever partial pressure of carbon dioxide is selected, it will be understood that it must be sufficiently high as to result in a quantity of the carbon dioxide gas dissolving into the slurry.

The quantity of carbon dioxide needed to achieve these pressures will depend in part upon the volume of carbonation chamber 44. The relationship between the amount of gaseous carbon dioxide in chamber 44 versus its concentration in the slurry contained therein can be described using Henry's Law, *p* = *k*_{H}*c*, wherein p is the partial pressure of the solute in the gas above the solution, c is the concentration of the solute in the solution and k_{H} is the Henry's law constant which will vary depending on the nature of the solute and solvent and the temperature of the system. In the carbonation method of the invention, carbon dioxide gas is the solute, the aqueous anode-forming slurry containing carbon dioxide is the solution and k_{H} is 29.4L-atm/mol for carbon dioxide dissolved in water at 298K. For comparison, the k_{H} for oxygen is 769.2 L-atm/mol and for hydrogen is 1282.1L-atm/mol, both of which are much less soluble in water than gaseous carbon dioxide. The solubility of the carbon dioxide will also depend in part on the temperature of the slurry with solubility increasing with decreasing temperature as shown in the graphical presentation of data in Fig. 5 relating carbon dioxide solubility in water with water temperature.

By controlling the temperature of the anode-forming slurry and the partial pressure of the carbon dioxide gas in the carbonation chamber 44, the amount of dissolved carbon dioxide can be controlled. These two factors will also be used to control the rate and extent to which the carbon dioxide gas is released from the slurry to cause the formation of spherical voids. This controlled rate of carbon dioxide gas evolution will be accompanied by viscosity changes in the slurry brought about by the gelling of the polymeric binder (processing aid) followed by drying resulting from evaporation of aqueous or organic particulate-suspending agents present in the slurry. When dissolving carbon dioxide gas in a slurry containing ethanol as the sole suspending agent, the concentration of carbon dioxide in the slurry will increase by an order of magnitude compared to the concentration of carbon dioxide attainable in a slurry where the suspending agent is entirely water.

Once the anode-forming slurry is carbonated to the level that will provide the desired void volume for the finished component, all or a portion of the slurry is transferred from the carbonation chamber to mold unit 56.

In the case of an ink, the carbonated slurry will be removed from the carbonation chamber and, following application of the carbonated slurry to a desired substrate, permitted to undergo carbon dioxide release at or about atmospheric pressure resulting in a foamed ink adhering to the substrate. Once deposited upon the substrate and in the absence of applied pressure and reduced temperature, the ink will continue to release carbon dioxide gas. The spherical voids resulting from the evolution of the carbon dioxide will be retained by the ink as a result of the ink's film-forming characteristics and surface tension. As the ink continues to dry, the foamed structure will solidify and then open up as the voids reach the surface through further drying.

In the case of molded cermet and ceramic materials, when during the process it is optimum to release dissolved carbon dioxide from the anode-forming slurry, the slurry, still chilled and under pressure, will have been transferred to mold unit 56. The point in time when controlled release of carbon dioxide gas will be initiated will generally be that point in the gel-casting process where the crosslinking reactions that cause gelling of the polymeric binder are just beginning, such being determined experimentally, the released carbon dioxide gas causing the partially solidified slurry to incorporate the resulting spherical voids in the form of a foam. As a result of the nature of the gelling reaction, once a foam has formed within the gelling slurry, a foamed structure will be retained throughout the remainder of the electrode manufacturing process.

After removing the slurry from the pressurized carbon dioxide environment and either applying it as a coating and allowing it to foam or providing it as a stand-alone foamed material, the resulting material is then processed as a cermet-based electrode employing known and conventional sintering and other processing techniques as shown in Fig. 3.

Turning now to the cermet electrolyte employed in the fabrication of the SOFC, an aqueous or non-aqueous cermet electrolyte slurry is applied to the unsintered shaped anode support (tubular or planar) described above. The supported anode may be partially sintered prior to electrolyte coating, but this is optional. Typical slurry coating techniques known to those skilled in the art, may be used. This includes, but is not limited to, spraying, dip-coating, screen printing, pad printing, painting, transferring, and the like. The suitability of the coating technique depends on the shape of the fuel electrode substrate and the thickness of the coated layer. A thin, uniform and well-bonded structure is required to ensure maximum performance and minimum resistance losses.

Similar techniques can be used to apply a thin interface layer (<20 microns) prior to layering the cermet electrolyte coating (onto the unsintered anode support). However, this is an optional step.

In one embodiment, a method for manufacturing an anode-supported SOFC using the cermet-based anode herein relies on the use of conventional ceramic powders, conventional metal and/or metal oxide powders, and other metal compounds, including metal salts. By reducing the thermal expansion coefficient mismatch between the cermet anode support and the cermet electrolyte coating, sintering of these two layers (until complete densification of the electrolyte layer) can be achieved without any detrimental damage to the structural integrity of the fuel cell. This is in contrast with established fuel cell processing methods whereby the electrode substrate is partially sintered or pre-sintered before the electrolyte coating is applied (see U.S. Pat. No. 6,436,565 to Song et al.). The subsequent firing of the cathode layers (<1200° C) allows for two sintering cycles only.

If conventional type powders are used in the manufacturing process, such as illustrated by FIG. 3, the cermet electrolyte-coated anode is sintered at relatively high temperatures, ranging from about 1200° C to about 1600° C, in order to achieve full densification of the cermet electrolyte coating under an oxidizing atmosphere.

An "air electrode slurry", i.e., cathode slurry, containing a mixture of cathode material and ceramic electrolyte material is then applied onto the gas-tight cermet electrolyte using conventional slurry coating processes. A second air electrode containing a single-phase cathode material is then applied onto the dry primary cathode coating. The use of a dual cathode structure allows for better thermal expansion coefficient matching with the electrolyte, and enhanced electrochemical properties. Preferred cathode materials belong to the following group of perovskites: LaSrMnO₃, LaSnFeO₃, (LaSr)(CoFe)O₃, LaCaMnO₃ and (LaCa)(CoFe)O₃. Air electrode coatings are then generally sintered at relatively low temperatures, typically less than 1200° C. Lower temperature sintering is used since the chemical reactivity at the cathode/electrolyte interface usually increases at higher temperatures, which in turn results in the potential formation of resistive secondary phases (see P. J. Gellings et al., "The CRC Handbook of Solid State Electrochemistry", CRC Press, December 1996). The use of an interlayer between the electrolyte and the first cathode may help to prevent the formation of such resistive compounds at high temperatures, however in this embodiment the interlayer is optional.

Another embodiment of the invention herein employs the aforedescribed carbonation method for manufacturing an anode-supported SOFC that utilizes a cermet electrolyte obtained from nano-sized ceramic powders, nano-sized metal and/or metal oxide powders, and other metal compounds, including metal salts, e.g., as more fully described in U.S. Patent No. 7,498,095. Nano-sized powders have an advantage over conventional ceramic powders in that their high surface area allows them to be densified at relatively low sintering temperatures. Therefore, the use of nano-sized ceramic and metal powders can significantly reduce the firing temperatures needed to achieve complete densification of the cermet electrolyte. In this embodiment, the cathodes can be applied on the unsintered electrolyte coating, and the entire cell (i.e., anode support, cermet electrolyte and cathodes) can be co-sintered in a single cycle, at temperatures below 1200° C.

In the embodiment described in FIG. 3, after the anode, electrolyte and cathode layers have been sintered, current collectors can be applied to complete the assembly of the SOFC. Highly conductive inks or pastes, preferably containing silver, are often used for the current collector component.

### EXAMPLE 1

An anode-forming slurry composition is prepared from a powder form of NiO admixed with a powder form of yttrium-stabilized zirconia (YSZ) so that following the reduction of the NiO, the amount of Ni in the anode will range from 30 to 80 vol.%. The anode-forming slurry composition of the mixed powders further includes water as solvent, a polyacrylic acid as a dispersant and methacrylamide, a cross-linkable polymer, as a binder. Suitable slurry compositions can possess 70 to 90 wt% total solids loading (NiO+YSZ), 5 to 25 wt% water, 0.1 to 5 wt% dispersant and 1 to 15 wt% binder. The composition is introduced into a sealed chamber, mixed until homogeneous and then chilled between 8 to 10°C.

Carbon dioxide gas is introduced into the sealed chamber (carbonation chamber) at a partial pressure of 1-2 atm(s) greater than ambient where it dissolves within the slurry. The chilled, carbonated slurry is thereafter transferred from the carbonation chamber to a suitably configured mold which is also at the aforesaid pressure. After the slurry has undergone transition from its initially fluid state to a semi-rigid state, the timing of such a change will have been determined from previous testing employing known types of equipment, e.g., a viscometer, or by empirical testing for a particular anode-forming composition, the pressure within the mold is reduced at a controlled rate so as to form spherical, gas-filled voids within the semi-rigid composition therein. The semi-rigid composition is then allowed to remain in the mold until it has reached a state that is sufficiently rigid as to retain its shape when removed from the mold. In general, there is a time interval of from 15 to 45 minutes from when the carbonated chilled slurry is introduced to the mold to when the slurry reaches a semi-rigid state in which the aforesaid reduction in pressure may be initiated, from 5 to 20 minutes for completion of the pressure reduction phase, and from 15 to 45 minutes from the end of the pressure reduction phase to the point where the spherical void-containing anode-forming composition is sufficiently rigid and shape-sustaining to permit its removal from the mold.

The molded anode-forming unit may then be dried in ambient air. Shorter drying times can be achieved by using a temperature/humidity chamber where the humidity is controlled and the temperature is increased. The humidity can be gradually decreased from a high humidity starting point of relative humidity (RH), e.g., 90 to 100% RH, until the formed piece is substantially completely dry. The anode-forming unit is then heated, e.g., at from 500 to 1200 °C for from 30 to 240 minutes, to remove volatile organic materials and burn out non-volatile organic materials such as binder and provide the finished anode.

### EXAMPLE 2

An ink-forming slurry is prepared from a mixture of perovskite material as the material for a cathode, e.g., LaSrMnO3, and another material as an electrolyte, e.g., YSZ, each in the range of from 35 to 60 wt%, and further includes solvent, dispersant and binder as in Example 1. Ink-forming slurry compositions can possess from 35 to 60 wt% solids loading (cathode+electrolyte or 100% cathode), 30 to 60 wt% solvent and 1 to 10 wt% each of the dispersant and binder. The components of this slurry are introduced into a sealed chamber (carbonation chamber) where they are mixed until homogeneous and are thereafter chilled to between 8 and10°C. Carbon dioxide gas is then introduced into the chilled slurry at a partial pressure of about 1-2 atm(s) greater than ambient where it dissolves in the slurry.

The ink-forming slurry in a semi-fluid state is then removed from the carbonation chamber and immediately coated onto a suitable substrate, e.g., a sintered electrolyte coated anode, at or about atmospheric pressure. During the coating procedure and thereafter until the final rigid state of the ink is achieved, carbon dioxide will be released from the ink coating forming entrained spherical voids therein. As the ink continues to dry, the coating forms a hardened, foamed structure on the substrate. After the ink is rigid and dried, the coated substrate is heated to remove volatile organic materials and then sintered as in Example 1 to burn out organic solids and provide the ceramic coating.

## Claims

1. A method of making a ceramic or cermet body which comprises:
(a) preparing a ceramic-forming or cermet-forming composition comprising
(i) at least one particulate ceramic or particulate cermet,
(ii) at least one binder,
(iii) at least one dispersant; and
(iv) at least one solvent;
(b) chilling the composition
(c) dissolving carbon dioxide gas in the chilled composition under pressure while said composition is in a fluid state;
(d) confining dissolved carbon dioxide-containing chilled composition while under pressure and in a fluid state;
(e) releasing dissolved carbon dioxide gas from the composition while said composition is undergoing transition from a fluid state to a semi-rigid state, the release of carbon dioxide gas resulting in the formation of spherical voids in the semi-rigid composition;
(f) allowing the spherical void-containing semi-rigid composition to undergo transition within the mold from the semi-rigid state to a rigid state, thereby providing a molded body having spherical voids entrained therein; and
(g) sintering the rigid composition containing spherical voids therein to provide the ceramic or cermet body.

2. The method of Claim 1, **characterized in that** the amount of carbon dioxide gas dissolved in the ceramic body-forming or cermet body-forming composition and the rate of carbon dioxide gas evolution from the ceramic body-forming or cermet body-forming composition are controlled by control of the temperature of the anode-forming body and control of the partial pressure of carbon dioxide gas in the carbonation-chamber.

3. The method of Claim 1 and/or 2, **characterized in that** said ceramic-forming or cermet-forming composition is chilled to a temperature of from -10°C to 12 °C prior to introducing carbon dioxide gas therein, the carbon dioxide gas being dissolved in the chilled composition at a partial pressure of from 0.5 to 5 atm.

4. The method of any of the preceding Claims 1 to 3, **characterized in that** said spherical voids entrained within the molded body are in the form of a foam.

5. The method of any of the preceding Claims 1 to 4, **characterized in that** a foamed cermet anode is provided.

6. A molding apparatus for carrying out the method of Claim 1 which comprises:
(a) a pressurizable mold possessing a cavity having a configuration corresponding to the configuration of an article to be molded therein;
(b) a source of particulate-containing composition to be molded in fluid communication with the cavity of the mold, the composition transitioning over time from a fluid state to a semi-rigid state and thereafter to a rigid state;
(c) a cooling element for chilling the particulate-containing composition prior to and/or after the introduction of the composition into the cavity of the mold;
(d) a source of pressurized gas in fluid communication with chilled particulate-containing composition, the pressurized gas being soluble in the chilled composition; and,
(e) at least one vent for the controlled release of pressurized gas.

7. The molding apparatus of Claim 6 further comprising:
(f) an agitating element for maintaining particulate present in the particulate-containing composition in suspension therein prior to and/or after introduction of the composition into the cavity of the mold.

8. The molding apparatus of Claim 6, **characterized in that** said cooling element (c) is part of particulate-containing composition source (b).

9. The molding apparatus of Claim 6, **characterized in that** a vent (e) is part of mold (a) and/or part of particulate-containing composition source (b).

10. The molding apparatus of Claim 7, **characterized in that** said agitating element (f) is part of particulate-containing composition source (b).

11. The molding apparatus of Claim 6, **characterized in that** said source of pressurized gas (d) is in fluid communication with chilled particulate-containing composition present in particulate-containing composition source (b).

12. The molding apparatus of Claim 6, **characterized in that** said cooling element (c) and a vent (e) are part of mold (a) and source of pressurized gas (c) is in fluid communication with chilled particulate-containing composition present in mold (a).

## Patentansprüche

1. Verfahren zur Herstellung eines Keramik- oder Cermetkörpers, umfassend:
(a) Herstellen einer keramikbildenden oder cermetbildenden Zusammensetzung enthaltend
(i) wenigstens eine partikelförmige Keramik oder einen partikelförmigen Cermet;
(ii) wenigstens einen Binder;
(iii) wenigstens ein Dispergiermittel; und
(iv) wenigstens ein Lösungsmittel;
(b) Abkühlen der Komponenten;
(c) Lösen von gasförmigem Kohlendioxid in der gekühlten Zusammensetzung unter Druck und im fließfähigen Zustand;
(d) Einengen der kohlendioxidhaltigen gekühlten Zusammensetzung unter Druck und im fleißfähigen Zustand;
(e) Freisetzen des gelösten Kohlendioxidgases aus der Zusammensetzung, während die Zubereitung vom fließfähigen Zustand zu einem halb erstarrten Zustand übergeht, wobei die Freisetzung des Kohlendioxidgases zur Bildung von sphärischen Leerstellen in der halb erstarrten Zusammensetzung führt;
(f) Zulassen, das sich die halb erstarrte, die sphärischen Leerstellen enthaltende Zusammensetzung in der Form vom halb erstarrten zum erstarrten Zustand umwandelt, wobei ein Formkörper entsteht, welcher darin enthaltende sphärische Leerstellen aufweist,
(g) Sintern der erstarrten Zusammensetzung mit den darin enthaltenen sphärischen Leerstellen unter Erhalt eines Keramik- oder Cermetkörpers.

2. Verfahren nach Anspruch 1, **dadurch gekennzeichnet, dass** die Menge an Kohlendioxidgas gelöst in der keramikbildenden oder cermetbildenden Zusammensetzung sowie die Geschwindigkeit der Freisetzung des Kohlendioxidgases aus der keramikbildenden oder cermetbildenden Zusammensetzung mit Hilfe einer Temperatursteuerung des Anodenbildenden Körpers und einer Partialdrucksteuerung des Kohlendioxidgases in der Karbonisierungskammer geregelt wird.

3. Verfahren nach den Ansprüchen 1 und/oder 2, **dadurch gekennzeichnet, dass** besagte keramikbildende oder cermetbildende Zusammensetzung vor dem Einleiten des Kohlendioxidgases auf eine Temperatur im Bereich von -10 bis 12 °C abgekühlt und das Kohlendioxidgas in der gekühlten Zusammensetzung mit einem Partialdruck im Bereich von 0,5 bis 5 atm gelöst wird.

4. Verfahren nach einem der Ansprüche 1 bis 3, **dadurch gekennzeichnet, dass** besagte sphärische Leerstellen, die im Formkörper eingeschlossen sind, die Form eines Schaums aufweisen.

5. Verfahren nach einem der Ansprüche 1 bis 4, **dadurch gekennzeichnet, dass** eine geschäumte Cermetanode erhalten wird.

6. Formvorrichtung zur Durchführung des Verfahrens nach Anspruch 1 umfassend:
(a) eine druckbelastbare Form enthaltend eine Aussparung, die dergestalt konfiguriert ist, dass sie zur Konfiguration des Körpers passt, der darin geformt werden soll;
(b) eine Quelle einer partikelhaltigen Zusammensetzung die in flüssigem Zusammenspiel mit der Aussparung der Form geformt werden soll, wobei die Zusammensetzung über die Zeit von einem flüssigen Zustand über einen halb erstarrten Zustand in einen erstarrten Zustand übergeht;
(c) ein Kühlelement zur Abkühlung der partikelhaltigen Zusammensetzung vor und/oder nach dem Einfüllen der Zusammensetzung in die Aussparung der Form;
(d) eine Menge an Gas unter Druck in flüssigem Zusammenspiel mit der gekühlten partikelhaltigen Zusammensetzung, wobei das unter Druck stehende Gas in der gekühlten Zusammensetzung löslich ist; und
(e) wenigstens eine Entlüftungsöffnung für die kontrollierte Freisetzung des unter Druck stehenden Gases.

7. Formvorrichtung nach Anspruch 6, weiter enthaltend
(f) ein Rührelement zur Aufrechterhaltung von Partikeln, die in der partikelhaltigen Zusammensetzung suspendiert vorliegt, vor und/oder nach dem Einfüllen der Zusammensetzung in die Aussparung in der Form.

8. Formvorrichtung nach Anspruch 6, **dadurch gekennzeichnet, dass** das Kühlelement (c) Teil der Quelle der partikelhaltigen Zusammensetzung (b) ist.

9. Formvorrichtung nach Anspruch 6, **dadurch gekennzeichnet, dass** die Entlüftungsöffnung (e) Teil der Form (a) und/oder der Quelle der partikelhaltigen Zusammensetzung (b) ist.

10. Formvorrichtung nach Anspruch 7, **dadurch gekennzeichnet, dass** das besagte Rührelement (f) Teil der Quelle der partikelhaltigen Zusammensetzung ist.

11. Formvorrichtung nach Anspruch 7, **dadurch gekennzeichnet, dass** die besagte Quelle für das unter Druck stehende Gas (d) in flüssigem Zusammenspiel mit der gekühlten partikelhaltigen Zusammensetzung in der Quelle der partikelhaltigen Zusammensetzung (b) steht.

12. Formvorrichtung nach Anspruch 6, **dadurch gekennzeichnet, dass** das besagte Kühlelement (c) und eine Entlüftungsöffnung (e) Teil der Form (a) ist und die Quelle für das unter Druck stehende Gas (d) in flüssigem Zusammenspiel mit der gekühlten partikelhaltigen Zusammensetzung, die sich in der Form (a) befindet, steht.

## Revendications

1. Procédé de fabrication d'un corps en céramique ou en cermet, comprenant :
(a) la préparation d'une composition de formation de céramique ou de formation de cermet comprenant :
(i) au moins une céramique particulaire ou un cermet particulaire,
(ii) au moins un liant,
(iii) au moins un dispersant ; et
(iv) au moins un solvant ;
(b) le refroidissement de la composition ;
(c) la dissolution de dioxyde de carbone gazeux dans la composition refroidie sous pression alors que ladite composition est dans un état fluide ;
(d) le confinement de la composition refroidie contenant du dioxyde de carbone dissous alors que ladite composition est sous pression et dans un état fluide ;
(e) le dégagement de dioxyde de carbone gazeux dissous à partir de la composition alors que ladite composition est en cours de transition d'un état fluide à un état semi-rigide, la libération de dioxyde de carbone gazeux entraînant la formation de vides sphériques dans la composition semi-rigide ;
(f) le fait de laisser la composition semi-rigide contenant des vides sphériques subir une transition à l'intérieur du moule, de l'état semi-rigide à un état rigide, en produisant ainsi un corps moulé comportant des vides sphériques qui y sont entraînés ; et
(g) le frittage de la composition rigide contenant des vides sphériques pour produire le corps en céramique ou en cermet.

2. Procédé selon la revendication 1, **caractérisé en ce que** la quantité de dioxyde de carbone gazeux dissoute dans la composition formant un corps en céramique ou formant un corps en cermet, et le débit de dégagement du dioxyde de carbone gazeux à partir de la composition formant un corps en céramique ou formant un corps en cermet, sont contrôlés en contrôlant la température du corps formant une anode et en contrôlant la pression partielle du dioxyde de carbone gazeux dans la chambre de carbonatation.

3. Procédé selon la revendication 1 et/ou 2, **caractérisé en ce que** ladite composition formant un corps en céramique ou formant un corps en cermet est refroidie jusqu'à une température de -10 °C à 12 °C avant l'introduction du dioxyde de carbone gazeux dans ladite composition, le dioxyde de carbone gazeux étant dissous dans la composition refroidie à une pression partielle de 0,5 à 5 atm.

4. Procédé selon l'une quelconque des revendications précédentes 1 à 3, **caractérisé en ce que** lesdits vides sphériques entraînés dans le corps moulé sont sous la forme d'une mousse.

5. Procédé selon l'une quelconque des revendications précédentes 1 à 4, **caractérisé en ce qu'**une anode en cermet expansé est présente.

6. Appareil de moulage pour la mise en oeuvre du procédé selon la revendication 1, comprenant :
(a) un moule pressurisable possédant une empreinte ayant une configuration correspondant à la configuration d'un article qui y sera moulé ;
(b) une source de composition contenant une matière particulaire à mouler, en communication fluidique avec l'empreinte du moule, la composition passant progressivement d'un état fluide à un état semi-rigide, puis à un état rigide ;
(c) un élément de refroidissement pour refroidir la composition contenant une matière particulaire avant et/ou après l'introduction de la composition dans l'empreinte du moule ;
(d) une source de gaz sous pression en communication fluidique avec la composition refroidie contenant une matière particulaire, le gaz sous pression étant soluble dans la composition refroidie ; et
(e) au moins un évent pour la libération contrôlée du gaz sous pression.

7. Appareil de moulage selon la revendication 6, comprenant en outre :
(f) un élément d'agitation servant à maintenir la matière particulaire présente dans la composition contenant une matière particulaire en suspension dans celle-ci avant et/ou après l'introduction de la composition dans l'empreinte du moule.

8. Appareil de moulage selon la revendication 6, **caractérisé en ce que** ledit élément de refroidissement (c) fait partie de la source de composition contenant une matière particulaire (b).

9. Appareil de moulage selon la revendication 6, **caractérisé en ce qu'**un évent (e) fait partie du moule (a) et/ou fait partie de la source de composition contenant une matière particulaire (b).

10. Appareil de moulage selon la revendication 7, **caractérisé en ce que** ledit élément d'agitation (f) fait partie de la source de composition contenant une matière particulaire (b).

11. Appareil de moulage selon la revendication 6, **caractérisé en ce que** ladite source de gaz sous pression (d) est en communication fluidique avec une composition refroidie contenant une matière particulaire présente dans la source de composition contenant une matière particulaire (b).

12. Appareil de moulage selon la revendication 6, **caractérisé en ce que** ledit élément de refroidissement (c) et un évent (e) font partie du moule (a) et la source de gaz sous pression (c) est en communication fluidique avec la composition refroidie contenant une matière particulaire présente dans le moule (a).
